(19) Europäisches Patentamt
European Patent Office
Office européen des brevets

(11) **EP 4 535 492 A1**

(12) **EUROPEAN PATENT APPLICATION**
published in accordance with Art. 153(4) EPC

(43) Date of publication:
**09.04.2025 Bulletin 2025/15**

(21) Application number: **23838736.9**

(22) Date of filing: **30.06.2023**

(51) International Patent Classification (IPC):
***H01M 10/0567*** *(2010.01)* ***C07C 309/66*** *(2006.01)*

(52) Cooperative Patent Classification (CPC):
**C07C 309/66; H01M 10/052; H01M 10/054; H01M 10/0567; H01M 10/42;** Y02E 60/10

(86) International application number:
**PCT/CN2023/104406**

(87) International publication number:
**WO 2024/012244 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 CN 202210832834**

(71) Applicant: **Huawei Technologies Co., Ltd.**
**Shenzhen, Guangdong 518129 (CN)**

(72) Inventors:
- **FAN, Xiulin**
  **Hangzhou, Zhejiang 310058 (CN)**
- **MA, Qiang**
  **Shenzhen, Guangdong 518129 (CN)**
- **ZHANG, Haikuo**
  **Hangzhou, Zhejiang 310058 (CN)**
- **HONG, Xiang**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **LOCAL HIGH-CONCENTRATION ELECTROLYTE, SECONDARY BATTERY, ELECTRONIC DEVICE, AND MOBILE APPARATUS**

(57) Embodiments of this application provide a locally high-concentration electrolyte solution, a secondary cell, an electronic device, and a mobile apparatus. The locally high-concentration electrolyte solution includes an electrolyte salt, an organic solvent, and a diluent containing a hydrogen-free polyhalogen substituted alkane compound and/or phenyl trifluoromethanesulfonate. A general formula of the hydrogen-free polyhalogen substituted alkane compound is $C_n(F_xCl_y)$, where n, x, and y are integers greater than or equal to 1, and n, x, and y satisfy: x+y=2n+2. According to the locally high-concentration electrolyte solution, the secondary cell, the electronic device, and the mobile apparatus provided in embodiments of this application, the diluent is added to reduce a viscosity of the electrolyte solution and improve infiltration of electrode plates, to improve a coulombic efficiency and cycle performance of the secondary cell. This helps satisfy a requirement of high-voltage working of the secondary cell.

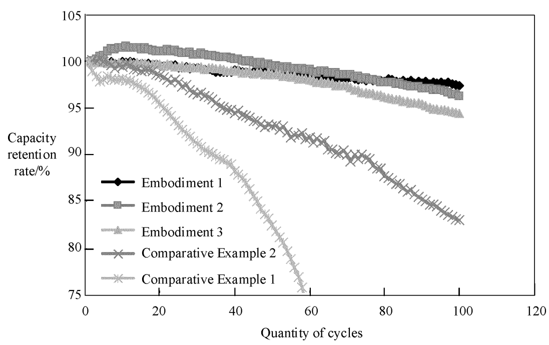


FIG. 6

EP 4 535 492 A1

## Description

This application claims priority to Chinese Patent Application 202210832834.3, filed with the China National Intellectual Property Administration on July 15, 2022 and entitled "LOCALLY HIGH-CONCENTRATION ELECTROLYTE SOLUTION, SECONDARY BATTERY, ELECTRONIC DEVICE, AND MOBILE APPARATUS", which is incorporated herein by reference in its entirety.

## TECHNICAL FIELD

Embodiments of this application relate to the field of battery technologies, and in particular, to a locally high-concentration electrolyte solution, a secondary cell, an electronic device, and a mobile apparatus.

## BACKGROUND

With the development of economy, and science and technology, most electronic industries (for example, electronic consumer products, new energy vehicles, and electric drones) have increasingly high requirements on energy density of secondary batteries. Currently, using an electrode material of high specific energy and increasing a working voltage of a battery are main ways to improve energy density of a secondary cell.

As a research hotspot of a high-voltage secondary cell system, a high-concentration electrolyte solution (a concentration of an electrolyte salt is usually greater than 3 mol/L) can resolve a problem of poor high-voltage resistance of a currently commonly used low-concentration electrolyte solution (a concentration of an electrolyte salt is usually less than 1.5 mol/L), and further has advantages of good compatibility with electrodes and high ion carrier density.

However, in current actual application, the high-concentration electrolyte solution still has disadvantages such as a relatively high viscosity and poor infiltration of electrode plates. Consequently, the secondary cell has a relatively low coulombic efficiency and relatively poor cycle performance, and a requirement of high-voltage working of the secondary cell cannot be effectively satisfied.

## SUMMARY

Embodiments of this application provide a locally high-concentration electrolyte solution, a secondary cell, an electronic device, and a mobile apparatus. In the locally high-concentration electrolyte solution, a hydrogen-free polyhalogen substituted alkane compound and/or phenyl trifluoromethanesulfonate are/is added as a diluent to reduce a viscosity of the electrolyte solution and improve infiltration of electrode plates, to improve a coulombic efficiency and cycle performance of the secondary cell. This helps satisfy a requirement of high-voltage working of the secondary cell.

According to a first aspect, a locally high-concentration electrolyte solution is provided, including an electrolyte salt, an organic solvent, and a diluent. The diluent includes at least one of a hydrogen-free polyhalogen substituted alkane compound and phenyl trifluoromethanesulfonate.

A general formula of the hydrogen-free polyhalogen substituted alkane compound is $C_n(F_xCl_y)$, where n, x, and y are integers greater than or equal to 1, and n, x, and y satisfy a formula: $x+y=2n+2$.

In this application, the hydrogen-free polyhalogen substituted alkane compound and/or the phenyl trifluoromethanesulfonate are/is added as the diluent to a high-concentration electrolyte solution, to form the locally high-concentration electrolyte solution. In this way, a total salt concentration and a viscosity of the high-concentration electrolyte solution can be reduced, and infiltration of electrode plates can be improved, to improve a coulombic efficiency and cycle performance of a secondary cell. This helps satisfy a requirement of high-voltage working of the secondary cell. The hydrogen-free polyhalogen substituted alkane compound and the phenyl trifluoromethanesulfonate have relatively low molecular polarities. Therefore, the electrolyte salt may have a relatively small solubility or no solubility in the diluent, so that a high-concentration salt-solvent cluster local coordination environment of the high-concentration electrolyte solution can be kept in the locally high-concentration electrolyte solution. The relatively low molecular polarity also helps compatibility between the diluent and the organic solvent, to avoid separation between the diluent and the organic solvent, thereby obtaining the clear and uniform locally high-concentration electrolyte solution.

In addition, a molecular structure of the hydrogen-free polyhalogen substituted alkane compound does not include a hydrogen element. Therefore, a hydrogen transfer reaction can be avoided on a surface of a positive electrode, to suppress oxidation and decomposition caused by contact between the electrolyte solution and the surface of the positive electrode under a high voltage. In this way, a high-voltage resistance capability of the locally high-concentration electrolyte solution can be improved, to help obtain a secondary cell with relatively high energy density. In addition, the hydrogen-free polyhalogen substituted alkane compound may be further decomposed on a surface of a negative electrode to form a stable interphase film rich in fluoride (for example, a lithium fluoride compound). This helps reduce a side reaction between the locally high-concentration electrolyte solution and the negative electrode and suppress growth of a dendrite. In this

way, the following case can be avoided: The dendrite grows to specific extent and penetrates a separator, thereby causing a battery circuit. This helps improve safety, a coulombic efficiency, and cycle performance of the secondary cell.

In addition, the phenyl trifluoromethanesulfonate may be decomposed to form an interphase film including a sulfide component (for example, the phenyl trifluoromethanesulfonate may be decomposed into lithium sulfide and lithium alkyl sulfonate). Because sulfide has a relatively high ion conductivity, an ion conductivity of the interphase film can be improved, and a rate capability of the secondary cell can be further improved.

With reference to the first aspect, in some implementations of the first aspect, a molecular polarity index MPI of the hydrogen-free polyhalogen substituted alkane compound satisfies the following formula:

$$MPI_1 = \frac{S_{polarity1}}{S_{total1}},$$

where

$MPI_1$ is the MPI of the hydrogen-free polyhalogen substituted alkane compound, $S_{polarity1}$ is a molecular polarity surface area of the hydrogen-free polyhalogen substituted alkane compound, and $S_{total1}$ is a total molecular surface area of the hydrogen-free polyhalogen substituted alkane compound.

An MPI of the phenyl trifluoromethanesulfonate satisfies the following formula:

$$MPI_2 = \frac{S_{polarity2}}{S_{total2}},$$

where

$MPI_2$ is the MPI of the phenyl trifluoromethanesulfonate, $S_{polarity2}$ is a molecular polarity surface area of the phenyl trifluoromethanesulfonate, and $S_{total2}$ is a total molecular surface area of the phenyl trifluoromethanesulfonate.

A value of the MPI of the hydrogen-free polyhalogen substituted alkane compound and a value of the MPI of the phenyl trifluoromethanesulfonate satisfy a preset condition.

In this application, molecular polarities of the hydrogen-free polyhalogen substituted alkane compound and the phenyl trifluoromethanesulfonate can be controlled by setting an appropriate preset condition. This helps control the electrolyte salt to have a relatively small solubility or have no solubility in the diluent, and also helps control compatibility between the diluent and the organic solvent.

With reference to the first aspect, in some implementations of the first aspect, the preset condition is that the value of the MPI of the hydrogen-free polyhalogen substituted alkane compound and the value of the MPI of the phenyl trifluoromethanesulfonate range from 5 to 10.

In a possible case, when the MPI of the hydrogen-free polyhalogen substituted alkane compound is less than 5, the hydrogen-free polyhalogen substituted alkane compound has poor compatibility with the organic solvent, and therefore, the diluent and the organic solvent may be layered or turbid. As a result, a clear and uniform locally high-concentration electrolyte solution cannot be formed. When the MPI of the hydrogen-free polyhalogen substituted alkane compound is greater than 10, the electrolyte salt has a relatively high solubility in the hydrogen-free polyhalogen substituted alkane compound, and therefore, a high-concentration salt-solvent cluster local coordination environment may not be generated. As a result, a locally high-concentration electrolyte solution cannot be formed.

Therefore, the hydrogen-free polyhalogen substituted alkane compound and the phenyl trifluoromethanesulfonate that satisfy the foregoing preset condition can have proper molecular polarities and can further have proper solubilities, to form the locally high-concentration electrolyte solution.

With reference to the first aspect, in some implementations of the first aspect, the hydrogen-free polyhalogen substituted alkane compound is of an asymmetric structure.

In this application, the hydrogen-free polyhalogen substituted alkane compound is set to be of an asymmetric structure, to help ensure that the hydrogen-free polyhalogen substituted alkane compound has a molecular polarity. This helps control compatibility between the hydrogen-free polyhalogen substituted alkane compound and the organic solvent.

With reference to the first aspect, in some implementations of the first aspect, a solubility of the electrolyte salt in the hydrogen-free polyhalogen substituted alkane compound and a solubility of the electrolyte salt in the phenyl trifluoromethanesulfonate are less than or equal to 0.1 mol/L, and the hydrogen-free polyhalogen substituted alkane compound and the phenyl trifluoromethanesulfonate are soluble in the organic solvent.

In this application, the solubility of the electrolyte salt in the hydrogen-free polyhalogen substituted alkane compound and the phenyl trifluoromethanesulfonate is appropriately set, so that a high-concentration salt-solvent cluster local coordination environment of the high-concentration electrolyte solution can be kept in the locally high-concentration

electrolyte solution. The diluent is controlled to be compatible with the organic solvent, to avoid separation between the diluent and the organic solvent, thereby obtaining the clear and uniform locally high-concentration electrolyte solution.

With reference to the first aspect, in some implementations of the first aspect, a value of n ranges from 1 to 20.

In this application, a quantity of carbon atoms in the hydrogen-free polyhalogen substituted alkane compound may range from 1 to 20. When the quantity of carbon atoms is within the foregoing range, the obtained hydrogen-free polyhalogen substituted alkane compound may have an appropriate molecular polarity.

With reference to the first aspect, in some implementations of the first aspect, a mass percentage of the diluent in the locally high-concentration electrolyte solution ranges from 10% to 90%.

In this application, when a content of the diluent is within the foregoing range, this helps enable the diluent to implement functions in the locally high-concentration electrolyte solution, and also helps avoid a problem of a decrease of electrochemical performance of the locally high-concentration electrolyte solution due to precipitation of the electrolyte salt because of an excessively high content of the diluent.

With reference to the first aspect, in some implementations of the first aspect, a viscosity of the locally high-concentration electrolyte solution is less than or equal to 8 mPa·s, and a conductivity of the locally high-concentration electrolyte solution is greater than or equal to 2.5 mS/cm.

In this application, an appropriate viscosity range and an appropriate conductivity range of the locally high-concentration electrolyte solution are set, to help improve infiltration of the electrode plates and further help improve a coulombic efficiency, a rate capability, and cycle performance of the secondary cell.

With reference to the first aspect, in some implementations of the first aspect, the electrolyte salt includes at least one of a lithium salt, a sodium salt, a potassium salt, a magnesium salt, a zinc salt, and an aluminum salt.

In this application, the corresponding electrolyte salt may be flexibly set based on different secondary cell systems to which the locally high-concentration electrolyte solution is applied.

With reference to the first aspect, in some implementations of the first aspect, the electrolyte salt includes at least one of $MClO_4$, $MBF_4$, $MPF_6$, $MAsF_6$, $MPF_2O_2$, $MCF_3SO_3$, MTDI, $MB(C_2O_4)_2$, $MBF_2C_2O_4$, $M[(CF_3SO_2)_2N]$, $M[(FSO_2)_2N]$, and $M[(C_mF_{2m+1}SO_2)\ (C_tF_{2t+1}SO_2)\ N]$.

M is Li, Na, or K, and m and t are integers greater than or equal to 0.

With reference to the first aspect, in some implementations of the first aspect, a molar concentration of the electrolyte salt in the locally high-concentration electrolyte solution ranges from 1 mol/L to 8 mol/L.

In this application, the molar concentration of the electrolyte salt is appropriately set, to help form the locally high-concentration electrolyte solution in the high-concentration salt-solvent cluster local coordination environment and further help obtain a secondary cell with relatively high energy density.

With reference to the first aspect, in some implementations of the first aspect, the organic solvent includes at least one of a carbonate solvent, a carboxylate solvent, and an ether solvent.

With reference to the first aspect, in some implementations of the first aspect, the locally high-concentration electrolyte solution further includes an additive; and the additive includes at least one of vinylene carbonate, trifluoromethyl ethylene carbonate, vinyl ethylene carbonate, 1,3-propane sultone, 1,4-butane sultone, ethylene sulfate, ethylene sulfite, methylene methanedisulfonate, butanedinitrile, adiponitrile, 1,2-bis(2-cyanoethoxy)ethane, 1,3,6-hexanetricarbonitrile, biphenyl, and fluorobenzene.

In this application, additives having different functions may be added to the locally high-concentration electrolyte solution according to an actual performance requirement.

According to a second aspect, a secondary cell is provided, including a positive electrode, a negative electrode, a separator, and the locally high-concentration electrolyte solution according to any implementation of the first aspect.

With reference to the second aspect, in some implementations of the second aspect, the secondary cell includes a lithium secondary cell, a potassium secondary cell, a sodium secondary cell, a magnesium secondary cell, a zinc secondary cell, or an aluminum secondary cell.

According to a third aspect, an electronic device is provided, including a housing, and a display, a circuit board assembly, and the secondary cell according to any implementation of the second aspect that are accommodated in the housing. The secondary cell supplies power to the circuit board assembly.

According to a fourth aspect, a mobile apparatus is provided. The mobile apparatus includes the secondary cell according to any implementation of the second aspect.

For beneficial effects of the second aspect to the fourth aspect, refer to the beneficial effects of the first aspect. Details are not described herein again.

## BRIEF DESCRIPTION OF DRAWINGS

FIG. 1 is a diagram of a structure of an electronic device according to an embodiment of this application;

FIG. 2 is a diagram of a working principle of a secondary cell according to an embodiment of this application;

FIG. 3 is a diagram of linear sweep voltammetry (linear sweep voltammetry, LSV) curves of electrolyte solutions according to Embodiment 1 and Comparative Example 2 of this application;

FIG. 4 is a diagram of charge and discharge curves of a battery according to Embodiment 1 of this application;

FIG. 5 is a diagram of charge and discharge curves of a battery according to Comparative Example 2 of this application;

FIG. 6 is a diagram of cycle performance curves of batteries according to Embodiments 1 to 3 and Comparative Examples 1 and 2 of this application; and

FIG. 7 is a diagram of cycle performance curves of batteries according to Embodiment 10 and Comparative Example 3 of this application.

## DESCRIPTION OF EMBODIMENTS

The following describes technical solutions of this application with reference to the accompanying drawings. It is clear that the described embodiments are merely some but not all of embodiments of this application.

Terms used in the following embodiments are merely intended to describe particular embodiments, but are not intended to limit this application. The terms "one", "a", "the", "the foregoing", "this", and "this one" of singular forms used in this specification and the appended claims of this application are also intended to include expressions such as "one or more", unless otherwise specified in the context clearly. It should be further understood that in the following embodiments of this application, the terms "at least one" and "one or more" mean one, two, or more. "At least one of the following items (pieces)" or a similar expression thereof indicates any combination of these items, including a single item (piece) or any combination of a plurality of items (pieces). The term "and/or" is used to describe an association relationship between associated objects and represents that three relationships may exist. For example, A and/or B may indicate the following cases: Only A exists, both A and B exist, and only B exists, where A and B each may be singular or plural. The character "/" usually indicates an "or" relationship between associated objects.

In the descriptions of this application, a weight of a mentioned related component may not only indicate a specific content of each component, but also indicate a weight proportional relationship between components. Therefore, any proportional increase or decrease of the content of the related component in this specification of embodiments of this application falls within the scope disclosed in this specification of embodiments of this application. Specifically, a mass described in embodiments of this application may be a mass unit well known in the chemical industry, for example, μg, mg, g, or kg.

Any embodiment or design scheme described as "exemplary", an "example", "for example", "optional", or "in some implementations" in this application should not be explained as being more preferred or having more advantages than another embodiment or design scheme. Exactly, use of these words is intended to present a related concept in a specific manner.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Before the embodiments of this application are described, technical terms appeared in this application are first described.

A primary cell (primary cell) may be an apparatus that converts chemical energy into electric energy. In the primary cell, electrons flow between a positive electrode and a negative electrode based on an electric potential difference between the positive electrode and the negative electrode.

A positive electrode (cathode) may be an electrode with a higher electric potential in electrodes in a primary cell. In a discharging processing, a current may flow out from the positive electrode, and the positive electrode may obtain an electron and have a reduction function. In a charging process, a current may flow to the positive electrode, and the positive electrode may lose an electron and have an oxidation function.

A negative electrode (anode) may be an electrode with a lower electric potential in electrodes in a primary cell. In a discharging process, a current may flow to the negative electrode, and the negative electrode may lose an electron and have an oxidation function. In a charging process, a current may flow out from the negative electrode, and the negative electrode may obtain an electron and have a reduction function.

An electrolyte (electrolyte) may be a medium that provides ion exchange between a positive electrode and a negative electrode of a battery.

A separator (separator) may be a medium used to separate a positive electrode and a negative electrode of a

battery and prevent a short circuit caused by direct contact between the positive electrode and the negative electrode. The separator further has a function of allowing electrolyte ions to pass through.

A solid electrolyte interphase (solid electrolyte interphase, SEI) film may indicate a passivation layer that covers a surface of an electrode material and that is formed in a reaction between the electrode material and an electrolyte solution on a solid-liquid interphase in initial charging and discharging processes of a liquid lithium-ion battery. The SEI film is an interphase layer, has features of a solid electrolyte, and is an electronic insulator. However, the SEI film is also an excellent conductor of $Li^+$. $Li^+$ can be freely intercalated and deintercalated through the SEI film.

A secondary cell (rechargeable battery) is also referred to as a rechargeable battery or a storage battery, and may be a battery that can be charged after being discharged to activate active materials for continuous use.

A high-concentration electrolyte solution may be an electrolyte solution in which when a concentration of an electrolyte salt in the electrolyte solution increases to a degree in which the solution almost does not contain free solvent molecules, anions of the electrolyte salt enter a solvent sheath, and the anions, cations, and solvent molecules mainly exist in a form of an aggregation and a contact ion pair. In other words, the high-concentration electrolyte solution has a high-concentration salt-solvent cluster local coordination environment. Compared with a commonly used low-concentration electrolyte solution (a concentration of an electrolyte salt is less than 1.5 mol/L), a concentration of an electrolyte salt in the high-concentration electrolyte solution is usually greater than 3 mol/L.

The solutions provided in embodiments of this application may be further applied to an electronic device or a mobile apparatus.

The electronic device may be, for example, a terminal consumer product or a 3C electronic product (a computer (computer), communication (communication), or consumer (consumer) electronic product), for example, a device such as a mobile phone, a mobile power supply, a portable computer, a tablet computer, an e-reader, a notebook computer, a digital camera, a wearable device, an in-vehicle terminal, or a headset.

The mobile apparatus may be, for example, a vehicle, an electric skateboard, or an electric bicycle.

FIG. 1 is a diagram of a structure of an electronic device 100 according to an embodiment of this application. An embodiment shown in FIG. 1 is described by using an example in which the electronic device 100 is a mobile phone.

The electronic device 100 may include a housing 10, a display 20, and a circuit board assembly 30. Specifically, the housing 10 may include a frame and a rear cover. The frame surrounds a periphery of the display 20 and surrounds a periphery of the rear cover. A cavity formed by the display 20, the frame, and the back cover may be used to place the circuit board assembly 30. In an example, both the display 20 and the circuit board assembly 30 can be disposed on the housing 10. The electronic device 100 may further include a secondary cell 40 configured to supply power to the circuit board assembly 30. The secondary cell 40 may be, for example, a lithium secondary cell, a potassium secondary cell, a sodium secondary cell, a magnesium secondary cell, a zinc secondary cell, or an aluminum secondary cell.

FIG. 2 is a diagram of a working principle of the secondary cell 40.

Core components of the secondary cell 40 may include a positive electrode 101, a negative electrode 102, an electrolyte solution 103, and a separator 104 (a corresponding connection auxiliary component, a loop, and the like are not shown). Metal ions (for example, lithium ions, sodium ions, potassium ions, magnesium ions, zinc ions, or aluminum ions) may be deintercalated from the positive electrode 101 and the negative electrode 102, to implement energy storage and release. As shown in FIG. 2, leftward motion of $Li^+$ (to the positive electrode 101) is an energy release process, and rightward motion of $Li^+$ (to the negative electrode 102) is an energy storage process. The electrolyte solution 103 may be a transmission carrier of metal ions between the positive electrode 101 and the negative electrode 102. The positive electrode 101 and the negative electrode 102 are main energy storage parts of the secondary cell 40, and can reflect energy density, cycle performance, and safety performance of the secondary cell 40. Metal ions can pass through the separator 104. The separator 104 is not conductive. Therefore, the separator 104 can separate the positive electrode 101 from the negative electrode 102, to prevent a short circuit between the positive electrode 101 and the negative electrode 102.

The positive electrode 101 may include a positive electrode active material capable of reversibly intercalating/deintercalating metal ions. A lithium secondary cell is used as an example. The positive electrode active material may include but is not limited to a composite metal oxide of lithium (for example, nickel cobalt lithium manganate ($LiNi_{0.8}Co_{0.1}Mn_{0.1}$), lithium iron phosphate ($LiFePO_4$), or lithium cobalt oxide ($LiCoO_2$)), a lithium polyanionic compound $LiMi(PO_4)_j$ (M is Ni, Co, Mn, Fe, Ti, or V, where $0 \le i \le 5$, and $0 \le j \le 5$), and the like.

The negative electrode 102 may include one or more of a carbon-based negative electrode, a silicon-based negative electrode, a tin-based negative electrode, a phosphorus-based negative electrode, lithium titanate, a lithium negative electrode, a sodium negative electrode, a magnesium negative electrode, a zinc negative electrode, and an aluminum negative electrode. The carbon-based negative electrode may be, for example, graphite, hard carbon, soft carbon, or graphene. The silicon-based negative electrode may be, for example, silicon, silicon carbon, silicon oxygen, or a silicon metal compound. The tin-based negative electrode may be, for example, tin, tin carbon, tin oxygen, or a tin metal compound. The phosphorus-based negative electrode may be, for example, red phosphorus, black phosphorus, or phosphide. The lithium negative electrode, the sodium negative electrode, the magnesium negative electrode, the zinc

negative electrode, and the aluminum negative electrode may be, for example, corresponding metal elements or alloys, or may be a current collector and a corresponding metal element or alloy disposed on the current collector. For example, the lithium negative electrode may be metal lithium or a lithium alloy, or may be a current collector and metal lithium or a lithium alloy disposed on the current collector. The lithium alloy may be specifically at least one of a lithium silicon alloy, a lithium aluminum alloy, a lithium tin alloy, and a lithium indium alloy.

The separator 104 may include, for example, but is not limited to, separators such as single-layer polyethylene (polyethylene, PE), single-layer polypropylene (polypropylene, PP), double-layer PE/PP, double-layer PP/PP, and three-layer PP/PE/PP.

The electrolyte solution 103 may include an electrolyte salt and an organic solvent. The electrolyte salt and the organic solvent may be determined based on a system of the secondary cell 40. For example, the secondary cell 40 is a lithium secondary cell. In the electrolyte solution 103, the electrolyte salt is usually lithium hexafluorophosphate ($LiPF_6$), and the organic solvent is usually a carbonate solvent. In addition, because a concentration of the electrolyte salt $LiPF_6$ in the electrolyte solution 103 is usually low (usually less than 1.5 mol/L), there are a large quantity of free solvent molecules in the electrolyte solution 103, and $Li^+$ may be usually coordinated with three or four solvent molecules and exist in a form of a separated ion pair. A formation process of the SEI film is mainly controlled by reduction or oxidation of solvent molecules.

Currently, the market has an increasingly high requirement on energy density of the secondary cell 40. A manner of improving the energy density of the secondary cell 40 is to improve battery operation of the secondary cell 40. However, because the carbonate solvent has a relatively low oxidation potential, oxidation and decomposition easily occur at a high voltage. Consequently, a carbonate electrolyte solution has relatively poor high-voltage resistance. When a working voltage of the secondary cell 40 is relatively high (for example, the working voltage is greater than 4.2 V), the carbonate electrolyte solution is prone to irreversible oxidation and decomposition. Consequently, it is difficult for the secondary cell 40 to maintain a stable cycle at a high voltage.

On this basis, a high-concentration electrolyte solution in which a concentration of an electrolyte salt is greater than 3 mol/L is currently proposed. The high-concentration electrolyte solution almost does not contain free solvent molecules. Anions and cations of the electrolyte salt, and solvent molecules mainly exist in a form of an aggregation and a contact ion pair. The SEI film is mainly composed of decomposition products of lithium salt anions. It can be learned that both a concentration of free solvent molecules and a solventization structure in the high-concentration electrolyte solution change obviously in comparison with the foregoing low-concentration carbonate electrolyte solution. This can resolve a problem of relatively poor high-voltage resistance of the low-concentration carbonate electrolyte solution. In addition, the high-concentration electrolyte solution has advantages of good compatibility with the electrodes and high ion carrier density.

However, in current actual application, because the concentration of the electrolyte salt is relatively large, the high-concentration electrolyte solution still has disadvantages such as a relatively high viscosity and poor infiltration of electrode plates. Consequently, the secondary cell 40 has a relatively low coulombic efficiency and relatively poor cycle performance, and a requirement of high-voltage working of the secondary cell 40 cannot be effectively satisfied.

In view of this, an embodiment of this application provides a locally high-concentration electrolyte solution. In the locally high-concentration electrolyte solution, a diluent including a hydrogen-free polyhalogen substituted alkane compound and/or phenyl trifluoromethanesulfonate is added to reduce a viscosity of the electrolyte solution and improve infiltration of electrode plates, to improve a coulombic efficiency and cycle performance of the secondary cell. This helps satisfy a requirement of high-voltage working of the secondary cell.

It may be understood that the locally high-concentration electrolyte solution provided in this embodiment of this application may be the electrolyte solution 103 shown in FIG. 2.

This embodiment of this application provides the locally high-concentration electrolyte solution. The locally high-concentration electrolyte solution may include an electrolyte salt, an organic solvent, and a diluent.

The diluent may include at least one of a hydrogen-free polyhalogen substituted alkane compound and phenyl trifluoromethanesulfonate. Specifically, a general formula of the hydrogen-free polyhalogen substituted alkane compound may be $C_n(F_xCl_y)$, where n, x, and y are integers greater than or equal to 1, and n, x, and y satisfy x+y=2n+2.

In the locally high-concentration electrolyte solution provided in this embodiment of this application, the hydrogen-free polyhalogen substituted alkane compound and/or the phenyl trifluoromethanesulfonate are/is added as the diluent to a high-concentration electrolyte solution, to form the locally high-concentration electrolyte solution. In this way, a total salt concentration and a viscosity of the high-concentration electrolyte solution can be reduced, and infiltration of electrode plates can be improved, to improve a coulombic efficiency and cycle performance of a secondary cell. This helps satisfy a requirement of high-voltage working of the secondary cell. The hydrogen-free polyhalogen substituted alkane compound and the phenyl trifluoromethanesulfonate have relatively low molecular polarities. Therefore, the electrolyte salt may have a relatively small solubility or no solubility in the diluent, so that a high-concentration salt-solvent cluster local coordination environment of the high-concentration electrolyte solution can be kept in the locally high-concentration electrolyte solution. The relatively low molecular polarity also helps compatibility between the diluent and the organic solvent, to avoid separation between the diluent and the organic solvent, thereby obtaining the clear and

uniform locally high-concentration electrolyte solution.

In addition, a molecular structure of the hydrogen-free polyhalogen substituted alkane compound does not include a hydrogen element. Therefore, a hydrogen transfer reaction can be avoided on a surface of a positive electrode, to suppress oxidation and decomposition caused by contact between the electrolyte solution and the surface of the positive electrode under a high voltage. In this way, a high-voltage resistance capability of the locally high-concentration electrolyte solution can be improved, to help obtain a secondary cell with relatively high energy density. In addition, the hydrogen-free polyhalogen substituted alkane compound may be further decomposed on a surface of a negative electrode to form a stable interphase film rich in fluoride (for example, a lithium fluoride compound). This helps reduce a side reaction between the locally high-concentration electrolyte solution and the negative electrode and suppress growth of a dendrite. In this way, the following case can be avoided: The dendrite grows to specific extent and penetrates a separator, thereby causing a battery circuit. This helps improve safety, a coulombic efficiency, and cycle performance of the secondary cell.

In addition, the phenyl trifluoromethanesulfonate may be decomposed to form an interphase film including a sulfide component (for example, the phenyl trifluoromethanesulfonate may be decomposed into lithium sulfide and lithium alkyl sulfonate). Because sulfide has a relatively high ion conductivity, an ion conductivity of the interphase film can be improved, and a rate capability of the secondary cell can be further improved.

The following describes in detail the phenyl trifluoromethanesulfonate and the hydrogen-free polyhalogen substituted alkane compound.

In some embodiments, phenyl in the phenyl trifluoromethanesulfonate may be phenyl replaced or not replaced by halogen. Specifically, a molecular structure of the phenyl trifluoromethanesulfonate may be shown by using General formula (I):

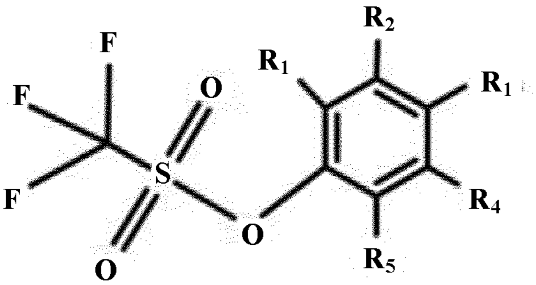

General formula (I)

Any one of a hydrogen atom, a fluorine atom, a chlorine atom, and a bromine atom may be selected as each of $R_1$ to $R_5$.

It may be understood that, if phenyl in the phenyl trifluoromethanesulfonate is phenyl replaced by a fluorine atom, the phenyl trifluoromethanesulfonate may also be decomposed on a surface of a negative electrode, to form a stable interphase film rich in fluoride (for example, a lithium fluoride compound), thereby reducing a side reaction between the locally high-concentration electrolyte solution and the negative electrode and suppressing growth of a dendrite.

In some embodiments, in the general formula $C_n(F_xCl_y)$ of the hydrogen-free polyhalogen substituted alkane compound, a value of n may range from 1 to 20. In other words, a quantity of carbon atoms in the hydrogen-free polyhalogen substituted alkane compound may range from 1 to 20. More preferably, the value of n may range from 1 to 10. Further preferably, the value of n may range from 2 to 6.

It may be understood that when the quantity of carbon atoms is within the foregoing range, the obtained hydrogen-free polyhalogen substituted alkane compound may have an appropriate molecular polarity.

Optionally, the hydrogen-free polyhalogen substituted alkane compound may be of an asymmetric structure, to help ensure that the hydrogen-free polyhalogen substituted alkane compound has a molecular polarity. This helps control compatibility between the hydrogen-free polyhalogen substituted alkane compound and the organic solvent.

Optionally, the hydrogen-free polyhalogen substituted alkane compound may be linear-chain, or may be branched-chain. This is not limited in this application.

In some embodiments, molecular polarity indices (molecular polarity indices, MPIs) of the hydrogen-free polyhalogen substituted alkane compound and the phenyl trifluoromethanesulfonate may be calculated by using Formulas (1) and (2) below, to indicate the molecular polarities of the hydrogen-free polyhalogen substituted alkane compound and the phenyl trifluoromethanesulfonate. It should be noted that a larger value of an MPI indicates a larger corresponding molecular polarity.

Specifically, the MPI of the hydrogen-free polyhalogen substituted alkane compound may be calculated by using Formula (1):

$$MPI_1 = \frac{S_{polarity1}}{S_{total1}} \quad \text{Formula (1)}$$

Herein, $MPI_1$ is the MPI of the hydrogen-free polyhalogen substituted alkane compound, $S_{polarity1}$ is a molecular polarity surface area of the hydrogen-free polyhalogen substituted alkane compound, and $S_{total1}$ is a total molecular surface area of the hydrogen-free polyhalogen substituted alkane compound.

The MPI of the phenyl trifluoromethanesulfonate may be calculated by using Formula (2):

$$MPI_2 = \frac{S_{polarity2}}{S_{total2}} \quad \text{Formula (2)}$$

Herein, $MPI_2$ is the MPI of the phenyl trifluoromethanesulfonate, $S_{polarity2}$ is a molecular polarity surface area of the phenyl trifluoromethanesulfonate, and $S_{total2}$ is a total molecular surface area of the phenyl trifluoromethanesulfonate.

For example, $S_{polarity1}$ in Formula (1) and $S_{polarity2}$ in Formula (2) may be calculated by using the following method:

First, the molecular structure of the hydrogen-free polyhalogen substituted alkane compound and the molecular structure of the phenyl trifluoromethanesulfonate are separately optimized at a 6-311+G(d, p) basis set level by using a B3LYP functional in a density functional theory (density functional theory, DFT), to obtain stable molecular configurations corresponding to the molecular structures. Then, molecular surface electrostatic potential (electrostatic potential, ESP) analysis is performed on each stable molecular configuration. A region in which a molecular surface ESP is greater than a preset threshold is defined as a polar surface. A surface area corresponding to the polar surface is a molecular polarity surface area corresponding to the polar surface.

It may be understood that the preset threshold may be set according to an actual application requirement, for example, may be 13 kcal/mol, 15 kcal/mol, 17 kcal/mol, or 20 kcal/mol. This is not limited in this application.

**In** some embodiments, it may be further set that a value of the **MPI** of the hydrogen-free polyhalogen substituted alkane compound and a value of the **MPI** of the phenyl trifluoromethanesulfonate that are calculated according to Formula (1) and Formula (2) satisfy a preset condition. Therefore, the hydrogen-free polyhalogen substituted alkane compound and/or the phenyl trifluoromethanesulfonate with an appropriate molecular polarity may be selected as the diluent according to the preset condition. This helps control solubilities of the hydrogen-free polyhalogen substituted alkane compound and the phenyl trifluoromethanesulfonate, further helps control the electrolyte salt to have a relatively small solubility or have no solubility in the diluent, and also helps control compatibility between the diluent and the organic solvent.

It should be noted that a specific setting of the preset condition may be determined based on the foregoing preset threshold. For example, the preset threshold may be 15 kcal/mol. **In** this case, the preset condition may be that the value of the **MPI** of the hydrogen-free polyhalogen substituted alkane compound and the value of the **MPI** of the phenyl trifluoromethanesulfonate range from 5 to 10, more preferably, from 5 to 9, and further preferably, from 6 to 8.

Based on the foregoing preset threshold and the preset condition, when the **MPI** of the hydrogen-free polyhalogen substituted alkane compound is less than 5, the hydrogen-free polyhalogen substituted alkane compound may have poor compatibility with the organic solvent, and therefore, the diluent and the organic solvent may be layered or turbid. As a result, a clear and uniform locally high-concentration electrolyte solution cannot be formed. When the **MPI** of the hydrogen-free polyhalogen substituted alkane compound is greater than 10, the electrolyte salt has a relatively high solubility in the hydrogen-free polyhalogen substituted alkane compound, and therefore, a high-concentration salt-solvent cluster local coordination environment may not be generated. As a result, a locally high-concentration electrolyte solution cannot be formed.

It may be understood that the preset threshold and the value of the preset condition are merely examples, and are not intended to limit this application. **In** a possible example, the preset threshold may be 13 kcal/mol. In this case, the preset condition may be that the value of the **MPI** of the hydrogen-free polyhalogen substituted alkane compound and the value of the **MPI** of the phenyl trifluoromethanesulfonate range from 4 to 11. This is not limited in this application.

**In** some embodiments, the solubility of the electrolyte salt in the hydrogen-free polyhalogen substituted alkane compound and/or the solubility of the electrolyte salt in the phenyl trifluoromethanesulfonate are/is less than or equal to 0.1 mol/L, and the hydrogen-free polyhalogen substituted alkane compound and the phenyl trifluoromethanesulfonate are soluble in the organic solvent.

The solubility of the electrolyte salt in the hydrogen-free polyhalogen substituted alkane compound and the phenyl trifluoromethanesulfonate is appropriately set, so that a high-concentration salt-solvent cluster local coordination environment of the high-concentration electrolyte solution can be kept in the locally high-concentration electrolyte solution. The diluent is controlled to be compatible with the organic solvent, to avoid separation between the diluent

and the organic solvent, thereby obtaining the clear and uniform locally high-concentration electrolyte solution.

In some embodiments, a percentage of the diluent in the locally high-concentration electrolyte solution ranges from 10% to 90%, more preferably from 15% to 80%, and further preferably from 20% to 50%.

It should be noted that an appropriate content of the diluent is added to the locally high-concentration electrolyte solution. This helps enable the diluent to implement functions in the locally high-concentration electrolyte solution, and also helps avoid a problem of a decrease of electrochemical performance of the locally high-concentration electrolyte solution due to precipitation of the electrolyte salt because of an excessively high content of the diluent.

In some embodiments, a viscosity of the locally high-concentration electrolyte solution may be less than or equal to 8 mPa·s, and a conductivity of the locally high-concentration electrolyte solution may be greater than or equal to 2.5 mS/cm. A viscosity and a conductivity of the locally high-concentration electrolyte solution are set to satisfy the foregoing ranges, to help improve infiltration of the electrode plates and further help improve a coulombic efficiency, a rate capability, and cycle performance of the secondary cell.

The foregoing describes composition of the diluent in the locally high-concentration electrolyte solution. The following specifically describes the electrolyte salt and the organic solvent that are included in the locally high-concentration electrolyte solution.

In some embodiments, based on different secondary cell systems, the electrolyte salt may be a lithium salt, a sodium salt, a potassium salt, a magnesium salt, a zinc salt, an aluminum salt, or the like.

In an example, the lithium salt, the sodium salt, and the potassium salt each may include at least one of $MClO_4$, $MBF_4$, $MPF_6$, $MAsF_6$, $MPF_2O_2$, $MCF_3SO_3$, MTDI, $MB(C_2O_4)_2$, $MBF_2C_2O_4$, $M[(CF_3SO_2)_2N]$, $M[(FSO_2)_2N]$, and $M[(C_mF_{2m+1}SO_2)(C_tF_{2t+1}SO_2)N]$, where M is Li, Na, or K, and m and t are integers greater than or equal to 0.

In another example, the magnesium salt, the zinc salt, or the aluminum salt may be a salt substance formed by magnesium ions, zinc ions, aluminum ions, and anions in the lithium salt, the sodium salt, and the potassium salt.

Optionally, a molar concentration of the electrolyte salt in the locally high-concentration electrolyte solution may range from 1 mol/L to 8 mol/L, and further may range from 2 mol/L to 7 mol/L, from 2 mol/L to 5 mol/L, or from 3 mol/L to 6 mol/L. This is not limited in this application.

In some embodiments, the organic solvent may include at least one of a carbonate solvent, a carboxylate solvent, and an ether solvent. Optionally, the solvent may be mixed in any proportion to form the organic solvent. This is not limited in this application.

The carbonate solvent may include cyclic carbonate and/or chain carbonate. The cyclic carbonate may include, for example, but is not limited to, at least one of the following: ethylene carbonate (ethylene carbonate, EC), propylene carbonate (propylene carbonate, PC), fluoroethylene carbonate (fluoroethylene carbonate, FEC), γ-butyrolactone (gamma-butyrolactone, GBL), and butylene carbonate (butylene carbonate, BC). The chain carbonate may include, for example, but is not limited to, at least one of the following: dimethyl carbonate (dimethyl carbonate, DMC), ethyl methyl carbonate (ethyl methyl carbonate, EMC), diethyl carbonate (diethyl carbonate, DEC) and dipropyl carbonate (dipropyl carbonate, DPC).

The carboxylate solvent may include, for example, but is not limited to, at least one of the following: methyl acetate (methyl acetate, MA), ethyl acetate (ethyl acetate, EA), propyl acetate, butyl acetate, n-propyl propionate (n-propyl propionate, PP), and butyl propionate.

The ether solvent may include cyclic ether and/or chain ether. The cyclic ether may include, for example, but is not limited to, at least one of the following: 1,3-dioxolane, 1,4-dioxane, crown ether, tetrahydrofuran (tetrahydrofuran, THF), 2-methyl tetrahydrofuran ($2-CH_3-THF$), and 2-trifluoromethyl tetrahydrofuran ($2-CF_3-THF$). The chain ether may include, for example, but is not limited to, at least one of the following: dimethoxymethane (dimethoxymethane, DMM), dimethoxyethane (ethylene glycol dimethoxy ether, DME), and diethylene glycol dimethyl ether.

In some embodiments, according to an actual application requirement, the locally high-concentration electrolyte solution may further include an additive. Specifically, various types of additives may be added to the locally high-concentration electrolyte solution, and different additives may have different functions. For example, the additive may include at least one of a film-forming additive, a high-voltage additive, an anti-overcharge additive, and an interphase wetting agent. This is not limited in this application.

The film-forming additive may be prior to the organic solvent to form a film on a surface of a negative electrode material. This helps improve cycle performance and a service life of a battery. For example, the film-forming additive may include but is not limited to at least one of the following: vinylene carbonate, trifluoromethyl ethylene carbonate, vinyl ethylene carbonate, 1,3-propane sultone, 1,4-butane sultone, ethylene sulfate, and ethylene sulfite.

The high-voltage additive may be preferentially decomposed at a high voltage to form a positive electrode protective film, to stabilize an interphase between the positive electrode and the electrolyte solution. This helps improve cycle performance and a service life of the battery. For example, the high-voltage additive may include but is not limited to at least one of the following: methylene methanedisulfonate, butanedinitrile, adiponitrile, 1,2-bis(2-cyanoethoxy)ethane, and 1,3,6-hexanetricarbonitrile.

The anti-overcharge additive can be used to prevent the battery from being overcharged, to help improve safety

performance of the battery. For example, the anti-overcharge additive may be biphenyl.

The interphase wetting agent can improve infiltration of the electrode plates in the locally high-concentration electrolyte solution, help reduce interphase resistance of the battery, and improve a rate capability, a discharge capacity, and a service life of the battery. For example, the interphase wetting agent may be fluorobenzene.

Optionally, a mass percentage of the additive in the locally high-concentration electrolyte solution may range from 0.1% to 10%, and may further range from 0.5% to 9%, from 1% to 6%, or from 2% to 7%. This is not limited in this application.

It should be noted that an appropriate content of additive is added to the locally high-concentration electrolyte solution. This helps the additive to implement functions and improve performance of the secondary cell, and helps avoid an excessively high viscosity of the locally high-concentration electrolyte solution due to the excessively high content of the additive. As a result, a coulombic efficiency and cycle performance of the secondary cell deteriorate.

An embodiment of this application provides a method for preparing a locally high-concentration electrolyte solution, including the following steps:

In an inert environment or a closed environment (for example, a glove box filled with argon gas), a fully dried electrolyte salt is dissolved in an organic solvent, and is stirred and mixed to obtain a uniform solution; and then a diluent is added to the uniform solution, and is stirred and mixed evenly to obtain a locally high-concentration electrolyte solution.

The operations in the foregoing preparation method may be implemented based on an existing conventional process of preparing an electrolyte solution. For specific descriptions of raw materials such as the electrolyte salt, the organic solvent, and the diluent, refer to the foregoing embodiments. Details are not described herein again.

In addition, when the locally high-concentration electrolyte solution further includes an additive, the additive may be added with the diluent.

The following describes effects of the technical solutions provided in embodiments of this application by using a plurality of embodiments and a plurality of comparative examples.

[Embodiment 1]

A locally high-concentration electrolyte solution provided in Embodiment 1 may include a lithium salt (lithium bis(fluorosulfonyl)imide, lithium bis(fluorosulfonyl)imide, LiFSI), an organic solvent (dimethoxyethane DME), and a diluent (1-chlorononafluorobutane). A mass ratio of DME and 1-chlorononafluorobutane is 50:50. A concentration of the lithium salt (LiFSI) is 1.5 mol/L.

Preparation of the locally high-concentration electrolyte solution in this embodiment:

In a glove box filled with argon gas, fully dried LiFSI is dissolved in the organic solvent DME, and stirred and mixed to obtain a uniform solution; and then 1-chlorononafluorobutane is added to the foregoing uniform solution, and stirred and mixed evenly to obtain the locally high-concentration electrolyte solution provided in Embodiment 1 of this application.

Preparation of a lithium secondary cell:

An adhesive polyvinylidene fluoride (polyvinylidene difluoride, PVDF), a conductive agent (for example, super conductive carbon black, super P, SP), and an active material lithium nickel manganese cobalt oxide ($LiNi_{0.8}Co_{0.1}Mn_{0.1}$, NCM) are added according to a mass percentage ratio 2%:2%:96% to a solvent N-methyl-2-pyrrolidone (N-methyl-2-pyrrolidone, NMP), and fully stirred and uniformly mixed, to form a positive electrode slurry. An aluminum foil current collector is evenly coated with the positive electrode slurry by using a coating device, and dried in an oven to remove an NMP solvent. Finally, a dried electrode plate is processed through cold pressing, cutting, and the like, to obtain a positive electrode plate.

The prepared positive electrode plate, a metal lithium negative electrode plate, and a commercial PE separator are made into an electrochemical cell. The electrochemical cell is packaged by using polymer. The locally high-concentration electrolyte solution prepared in Embodiment 1 of this application is injected. A pouch lithium secondary cell is prepared after a process such as formation.

[Embodiment 2]

A locally high-concentration electrolyte solution provided in Embodiment 2 may include a lithium salt (lithium bis(fluorosulfonyl)imide LiFSI), an organic solvent (dimethoxyethane DME), and a diluent (1,1-dichlorotetrafluoroethane). A mass ratio of DME and 1,1-dichlorotetrafluoroethane is 50:50. A concentration of the lithium salt (LiFSI) is 1.5 mol/L.

Preparation of the locally high-concentration electrolyte solution in this embodiment:

In a glove box filled with argon gas, fully dried LiFSI is dissolved in the organic solvent DME, and stirred and mixed to obtain a uniform solution; and then 1,1-dichlorotetrafluoroethane is added to the foregoing uniform solution, and stirred and mixed evenly to obtain the locally high-concentration electrolyte solution provided in Embodiment 2 of this application.

Preparation of a lithium secondary cell:

Preparation of the lithium secondary cell is the same as that in Embodiment 1.

[Embodiment 3]

A locally high-concentration electrolyte solution provided in Embodiment 3 may include a lithium salt (lithium bis(fluorosulfonyl)imide LiFSI), an organic solvent (dimethoxyethane DME), and a diluent (1,1,1-trichlorotrifluoroethane). A mass ratio of DME and 1,1,1-trichlorotrifluoroethane is 50:50. A concentration of the lithium salt (LiFSI) is 1.5 mol/L.

Preparation of the locally high-concentration electrolyte solution in this embodiment:

In a glove box filled with argon gas, fully dried LiFSI is dissolved in the organic solvent DME, and stirred and mixed to obtain a uniform solution; and then 1,1,1-trichlorotrifluoroethane is added to the foregoing uniform solution, and stirred and mixed evenly to obtain the locally high-concentration electrolyte solution provided in Embodiment 3 of this application.

Preparation of a lithium secondary cell:

Preparation of the lithium secondary cell is the same as that in Embodiment 1.

[Embodiment 4]

A locally high-concentration electrolyte solution provided in Embodiment 4 may include a lithium salt (lithium bis(fluorosulfonyl)imide LiFSI), an organic solvent (formed by mixing dimethoxyethane DME and fluoroethylene carbonate FEC), and a diluent (1-chlorononafluorobutane). A mass ratio of DME, FEC, and 1-chlorononafluorobutane is 50:10:40. A concentration of the lithium salt (LiFSI) is 2.0 mol/L.

Preparation of the locally high-concentration electrolyte solution in this embodiment:

In a glove box filled with argon gas, DME and FEC are mixed to form the organic solvent; fully dried LiFSI is dissolved in the organic solvent, and stirred and mixed to obtain a uniform solution; and then 1-chlorononafluorobutane is added to the foregoing uniform solution, and stirred and mixed evenly to obtain the locally high-concentration electrolyte solution provided in Embodiment 4 of this application.

Preparation of a lithium secondary cell:

Preparation of the lithium secondary cell is the same as that in Embodiment 1.

[Embodiment 5]

A locally high-concentration electrolyte solution provided in Embodiment 5 may include a lithium salt (lithium bis(trifluoromethanesulfonyl)imide LiTFSI), an organic solvent (dimethoxyethane DME), and a diluent (1-chlorononafluorobutane). A mass ratio of DME and 1-chlorononafluorobutane is 50:50. A concentration of the lithium salt (LiTFSI) is 1.5 mol/L.

Preparation of the locally high-concentration electrolyte solution in this embodiment:

In a glove box filled with argon gas, fully dried LiTFSI is dissolved in the organic solvent DME, and stirred and mixed to obtain a uniform solution; and then 1-chlorononafluorobutane is added to the foregoing uniform solution, and stirred and mixed evenly to obtain the locally high-concentration electrolyte solution provided in Embodiment 5 of this application.

Preparation of a lithium secondary cell:

Preparation of the lithium secondary cell is the same as that in Embodiment 1.

[Embodiment 6]

A locally high-concentration electrolyte solution provided in Embodiment 6 may include a lithium salt (lithium bis(fluorosulfonyl)imide LiFSI), an organic solvent (dimethoxyethane DME), and a diluent (phenyl trifluoromethanesulfonate). A mass ratio of DME and phenyl trifluoromethanesulfonate is 50:50. A concentration of the lithium salt (LiFSI) is 1.5 mol/L.

Preparation of the locally high-concentration electrolyte solution in this embodiment:

In a glove box filled with argon gas, fully dried LiFSI is dissolved in the organic solvent DME, and stirred and mixed to obtain a uniform solution; and then phenyl trifluoromethanesulfonate is added to the foregoing uniform solution, and stirred and mixed evenly to obtain the locally high-concentration electrolyte solution provided in Embodiment 6 of this application.

Preparation of a lithium secondary cell:

Preparation of the lithium secondary cell is the same as that in Embodiment 1.

[Embodiment 7]

A locally high-concentration electrolyte solution provided in Embodiment 7 may include a lithium salt (lithium bis(fluorosulfonyl)imide LiFSI), an organic solvent (dimethoxyethane DME), and a diluent (obtained by mixing 1-chlorononafluorobutane and 1,1,1-trichlorotrifluoroethane). A mass ratio of DME, 1-chlorononafluorobutane, and 1,1,1-trichlorotrifluoroethane is 40:30:30. A concentration of the lithium salt (LiFSI) is 1.5 mol/L.

Preparation of the locally high-concentration electrolyte solution in this embodiment:

In a glove box filled with argon gas, fully dried LiFSI is dissolved in the organic solvent DME, and stirred and mixed to obtain a uniform solution; and then1-chlorononafluorobutane and 1,1,1-trichlorotrifluoroethane are added to the foregoing uniform solution, and stirred and mixed evenly to obtain the locally high-concentration electrolyte solution provided in Embodiment 7 of this application.

Preparation of a lithium secondary cell:

Preparation of the lithium secondary cell is the same as that in Embodiment 1.

[Embodiment 8]

A locally high-concentration electrolyte solution provided in Embodiment 8 may include a lithium salt (obtained by mixing lithium bis(fluorosulfonyl)imide LiFSI and lithium difluoro(oxalato)borate (lithium difluoro(oxalato)borate, LiDFOB)), an organic solvent (dimethoxyethane DME), and a diluent (1-chlorononafluorobutane). A mass ratio of DME and 1-chlorononafluorobutane is 50:50. A concentration of lithium bis(fluorosulfonyl)imide LiFSI is 1.5 mol/L. A concentration of lithium difluoro(oxalato)borate LiDFOB is 0.1 mol/L.

Preparation of the locally high-concentration electrolyte solution in this embodiment:

In a glove box filled with argon gas, fully dried LiFSI and LiDFOB are dissolved in the organic solvent DME, and stirred and mixed to obtain a uniform solution; and then 1-chlorononafluorobutane is added to the foregoing uniform solution, and stirred and mixed evenly to obtain the locally high-concentration electrolyte solution provided in Embodiment 8 of this application.

Preparation of a lithium secondary cell:

Preparation of the lithium secondary cell is the same as that in Embodiment 1.

[Embodiment 9]

A locally high-concentration electrolyte solution provided in Embodiment 9 may include a lithium salt (lithium bis(fluorosulfonyl)imide LiFSI), an organic solvent (dimethoxyethane DME), a diluent (1-chlorononafluorobutane), and an additive ethylene sulfate (ethylene sulfate, DTD for short). A mass ratio of DME and 1-chlorononafluorobutane is 50:50. A concentration of the lithium salt (LiFSI) is 1.5 mol/L. A mass percentage of ethylene sulfate DTD is 2%.

Preparation of the locally high-concentration electrolyte solution in this embodiment:

In a glove box filled with argon gas, fully dried LiFSI is dissolved in the organic solvent DME, and stirred and mixed to obtain a uniform solution; and then 1-chlorononafluorobutane and DTD are added to the foregoing uniform solution, and stirred and mixed evenly to obtain the locally high-concentration electrolyte solution provided in Embodiment 9 of this application.

Preparation of a lithium secondary cell:

Preparation of the lithium secondary cell is the same as that in Embodiment 1.

[Embodiment 10]

A locally high-concentration electrolyte solution provided in Embodiment 10 may include a lithium salt (lithium bis(fluorosulfonyl)imide LiFSI), an organic solvent (formed by mixing dimethyl carbonate DMC and fluoroethylene carbonate FEC), and a diluent (1-chlorononafluorobutane). A mass ratio of DMC, FEC, and 1-chlorononafluorobutane is 50:10:40. A concentration of the lithium salt (LiFSI) is 2.0 mol/L.

Preparation of the locally high-concentration electrolyte solution in this embodiment:

In a glove box filled with argon gas, DMC and FEC are mixed to form the organic solvent; fully dried LiFSI is dissolved in the organic solvent, and stirred and mixed to obtain a uniform solution; and then 1-chlorononafluorobutane is added to the foregoing uniform solution, and stirred and mixed evenly to obtain the locally high-concentration electrolyte solution provided in Embodiment 10 of this application.

Preparation of a lithium secondary cell:

An adhesive polyvinylidene fluoride PVDF, a conductive agent SP, and an active material lithium cobalt oxide ($LiCoO_2$) are added according to a mass percentage ratio 2%:2%:96% to a solvent NMP, and fully stirred and uniformly mixed, to form a positive electrode slurry. An aluminum foil current collector is evenly coated with the positive electrode slurry by using a coating device, and dried in an oven to remove an NMP solvent. Finally, a dried electrode plate is processed through cold pressing, cutting, and the like, to obtain a positive electrode plate.

Sodium carboxymethyl cellulose (carboxymethyl cellulose, CMC), styrene butadiene rubber (polymerized styrene butadiene rubber, SBR), acetylene black, and graphite are sequentially added according to a mass percentage ratio 1.5%:2.5%:1%:96% to deionized water, and fully stirred and uniformly mixed, to form a mixed negative electrode slurry. Then, a copper foil current collector is evenly coated with the negative electrode slurry by using a coating device, and dried in an oven. Finally, an electrode plate obtained after the coating is processed through cold pressing, cutting, and the like, to obtain a negative electrode plate. The negative electrode plate is obtained through drying, cold pressing, and cutting.

The prepared positive electrode plate, the prepared negative electrode plate, and a commercial PE separator are made into an electrochemical cell. The electrochemical cell is packaged by using polymer. The locally high-concentration electrolyte solution prepared in Embodiment 10 of this application is injected. A pouch lithium secondary cell is prepared after a process such as formation.

[Embodiment 11]

A locally high-concentration electrolyte solution provided in Embodiment 11 may include a lithium salt (lithium bis(fluorosulfonyl)imide LiFSI), an organic solvent (formed by mixing dimethyl carbonate DMC and fluoroethylene carbonate FEC), and a diluent (formed by mixing 1-chlorononafluorobutane and phenyl trifluoromethanesulfonate). A mass ratio of DMC, FEC, 1-chlorononafluorobutane, and phenyl trifluoromethanesulfonate is 50:10:20:20. A concentration of the lithium salt (LiFSI) is 2.0 mol/L.

Preparation of the locally high-concentration electrolyte solution in this embodiment:

In a glove box filled with argon gas, DMC and FEC are mixed to form the organic solvent; fully dried LiFSI is dissolved in the organic solvent, and stirred and mixed to obtain a uniform solution; and then 1-chlorononafluorobutane and phenyl trifluoromethanesulfonate are added to the foregoing uniform solution, and stirred and mixed evenly to obtain the locally high-concentration electrolyte solution provided in Embodiment 11 of this application.

Preparation of a lithium secondary cell:

Preparation of the lithium secondary cell is the same as that in Embodiment 10.

[Comparative Example 1]

An electrolyte solution in a lithium secondary cell provided in Comparative Example 1 includes a lithium salt ($LiPF_6$) and an organic solvent (formed by mixing ethylene carbonate EC, dimethyl carbonate DMC, and fluoroethylene carbonate FEC). A mass ratio of EC, DEC, and FEC is 30:60:10. A concentration of the lithium salt ($LiPF_6$) is 1.0 mol/L.

Preparation of the electrolyte solution in the lithium secondary cell in this embodiment:

In a glove box filled with argon gas, EC, DEC, and FEC are mixed to form an organic solvent; and then fully dried $LiPF_6$ is dissolved in the organic solvent, and stirred and mixed to obtain a uniform solution. In this way, the electrolyte solution in the lithium secondary cell provided in Comparative Example 1 of this application is obtained.

Preparation of the lithium secondary cell:

Preparation of the lithium secondary cell is the same as that in Embodiment 1.

[Comparative Example 2]

An electrolyte solution in a lithium secondary cell provided in Comparative Example 2 includes a lithium salt (lithium bis(fluorosulfonyl)imide LiFSI), an organic solvent (dimethoxyethane DME), and a diluent (1,1,2,2-tetrafluoroethyl-2,2,3,3-tetrafluoropropylether). A mass ratio of DME and 1,1,2,2-tetrafluoroethyl-2,2,3,3-tetrafluoropropylether is 50:50. A concentration of the lithium salt (LiFSI) is 1.5 mol/L.

Preparation of the electrolyte solution in the lithium secondary cell in this embodiment:

In a glove box filled with argon gas, fully dried LiFSI is dissolved in the organic solvent DME, and stirred and mixed to obtain a uniform solution; and then 1,1,2,2-tetrafluoroethyl-2,2,3,3-tetrafluoropropylether is added to the foregoing uniform solution, and stirred and mixed evenly to obtain the electrolyte solution in the lithium secondary cell provided in Comparative Example 2 of this application.

Preparation of a lithium secondary cell:

Preparation of the lithium secondary cell is the same as that in Embodiment 1.

[Comparative Example 3]

An electrolyte solution in a lithium secondary cell provided in Comparative Example 3 includes a lithium salt (lithium bis(fluorosulfonyl)imide LiFSI), an organic solvent (formed by mixing dimethyl carbonate DMC and fluoroethylene carbonate FEC), and a diluent (1,1,2,2-tetrafluoroethyl-2,2,3,3-tetrafluoropropylether). A mass ratio of DMC, FEC, and 1,1,2,2-tetrafluoroethyl-2,2,3,3-tetrafluoropropylether is 50:10:40. A concentration of the lithium salt (LiFSI) is 2 mol/L.

Preparation of the electrolyte solution in the lithium secondary cell in this embodiment:

In a glove box filled with argon gas, DMC and FEC are mixed to form an organic solvent; fully dried LiFSI is dissolved in the organic solvent, and stirred and mixed to obtain a uniform solution; and then 1,1,2,2-tetrafluoroethyl-2,2,3,3-tetrafluoropropylether is added to the foregoing uniform solution, and stirred and mixed evenly to obtain the electrolyte solution in the lithium secondary cell provided in Comparative Example 3 of this application.

Preparation of a lithium secondary cell:

Preparation of the lithium secondary cell is the same as that in Embodiment 10.

MPIs of components included in the diluents in Embodiments 1 to 11 of this application and Comparative Examples 1 to 3 are calculated. Calculation results are shown in Table 1.

The following electrochemical performance tests are performed on the electrolyte solutions and the lithium secondary batteries that are obtained in Embodiments 1 to 11 of this application and Comparative Examples 1 to 3:

(1) Stainless steel/lithium battery performance test: A stainless steel positive electrode, a metal lithium negative electrode, and a separator are assembled into a button cell; and 100 μL of each of the locally high-concentration electrolyte solutions obtained in Embodiments 1 to 11 and the electrolyte solutions in the lithium secondary batteries obtained in Comparative Examples 1 to 3 is added dropwise. Then, the obtained button battery is tested from an open-circuit voltage to 6.0 V at a speed of 1 mV/s. Test results are shown in Table 1 and FIG. 3. Table 1 shows decomposition potentials of stainless steel/lithium batteries corresponding to Embodiments 1 to 11 and Comparative Examples 1 to 3. FIG. 3 is a diagram of LSV curves of stainless steel/lithium batteries corresponding to Embodiment 1 and Comparative Example 2.

(2) Copper/lithium battery performance test: A copper positive electrode, a metal lithium negative electrode, and a separator are assembled into a button cell; and 100 μL of each of the locally high-concentration electrolyte solutions obtained in Embodiments 1 to 11 and the electrolyte solutions in the lithium secondary batteries obtained in Comparative Examples 1 to 3 is added dropwise.

Then, the obtained button battery is tested according to the following test procedure setting:
An initial charge/discharge current density is 0.5 mA/cm$^2$. An initial deposition amount is 4.0 mAh/cm$^2$. A cyclic discharge current density is 0.5 mA/cm$^2$. A cyclic charge current density is 1.5 mA/cm$^2$. A cyclic deposition amount is 1.0 mAh/cm$^2$. A quantity of cycles is 50.

Based on the foregoing test results, an average coulombic efficiency of the button battery is calculated according to Formula (3). Calculation results are shown in Table 1.

$$CE_{avg} = \frac{gQ_c + Q_s}{gQ_c + Q_T} \quad \text{Formula (3)}$$

Herein, $CE_{avg}$ is the average coulombic efficiency of the battery, $Q_c$ is a cyclic charge capacity of the battery, $Q_s$ is a final charge capacity of the battery, $Q_T$ is an initial discharge capacity of the battery, and g is a quantity of charge/-discharge cycles of the battery.

(3) Lithium secondary cell performance test: A charge/discharge cycle test is performed at a charge/discharge rate of 0.2 C/0.5 C on the assembled lithium secondary batteries in Embodiments 1 to 11 and Comparative Examples 1 to 3. Voltage ranges of the lithium secondary batteries are set to 3.0 V to 4.4 V. Capacity retention rates of the lithium secondary batteries after 100 cycles are recorded. Test results are shown in Table 1 and FIG. 4 to FIG. 7. Table 1 shows the capacity retention rates of the lithium secondary batteries provided in Embodiments 1 to 11 and Comparative Examples 1 to 3 after 100 cycles. FIG. 4 is a diagram of charge and discharge curves of the lithium secondary cell according to Embodiment 1. FIG. 5 is a diagram of charge and discharge curves of the lithium secondary cell according to Comparative Example 2. FIG. 6 is a diagram of cycle performance curves of the lithium secondary batteries according to Embodiments 1 to 3 and Comparative Examples 1 and 2. FIG. 7 is a diagram of cycle performance curves of the lithium secondary batteries according to Embodiment 10 and Comparative Example 3.

Table 1

| Embodiment/Comparative Example | Decomposition potential/V | Molecular polarity index MPI | Copper/lithium battery average coulombic efficiency $CE_{avg}$/% | Lithium secondary cell capacity retention rate/% |
|---|---|---|---|---|
| Embodiment 1 | 5.6 | 7.3 | 99.5 | 97.4 |
| Embodiment 2 | 5.5 | 8.2 | 99.3 | 96.3 |
| Embodiment 3 | 5.4 | 9.4 | 99.2 | 94.5 |
| Embodiment 4 | 5.7 | 7.3 | 99.6 | 97.6 |

(continued)

| Embodiment/Comparative Example | Decomposition potential/V | Molecular polarity index MPI | Copper/lithium battery average coulombic efficiency $CE_{avg}$/% | Lithium secondary cell capacity retention rate/% |
|---|---|---|---|---|
| Embodiment 5 | 5.3 | 7.3 | 99.4 | 96.5 |
| Embodiment 6 | 5.4 | 9.9 | 99.4 | 96.5 |
| Embodiment 7 | 5.3 | 7.3/9.4 | 99.4 | 95.3 |
| Embodiment 8 | 5.2 | 7.3 | 99.6 | 97.6 |
| Embodiment 9 | 5.2 | 7.3 | 99.6 | 97.7 |
| Embodiment 10 | 5.7 | 7.3 | 99.3 | 97.6 |
| Embodiment 11 | 5.7 | 7.3/9.9 | 99.4 | 97.8 |
| Comparative Example 1 | 5.8 | / | 90.5 | 36.9 |
| Comparative Example 2 | 4.7 | 5.8 | 99.5 | 83.1 |
| Comparative Example 3 | 4.7 | 5.8 | 99.3 | 94.7 |

It can be learned from Table 1 that decomposition potentials of stainless steel/lithium batteries in Embodiments 1 to 9 are higher than a decomposition potential of a stainless steel/lithium battery in Comparative Example 2. Further, based on the LSV curves shown in FIG. 3, it may also indicate that the decomposition potential of the stainless steel/lithium battery in Embodiment 1 is higher than the decomposition potential of the stainless steel/lithium battery in Comparative Example 2. In addition, it can also be learned from Table 1 that capacity retention rates of nickel cobalt lithium manganate/lithium secondary batteries in Embodiments 1 to 9 after 100 cycles are all higher than capacity retention rates of nickel cobalt lithium manganate/lithium secondary batteries in Comparative Example 1 and Comparative Example 2 after 100 cycles, and average coulombic efficiencies of the copper/lithium batteries in Embodiments 1 to 9 in 50 cycles are also higher than an average coulombic efficiency of the copper/lithium battery in Comparative Example 1 in 50 cycles. Further, it can be learned from the diagrams of the cycle performance curves shown in FIG. 4 and FIG. 5 that charge and discharge curves of the nickel cobalt lithium manganate/lithium secondary cell in Embodiment 1 are relatively stable and have relatively small polarization, while charge and discharge curves of the nickel cobalt lithium manganate/lithium secondary cell in Comparative Example 2 have relatively large polarization that continuously increases.

This is mainly because the hydrogen-free polyhalogen substituted alkane compound (for example, 1-chlorononafluorobutane, 1,1-dichlorotetrafluoroethane, or 1,1,1-trichlorotrifluoroethane) or the phenyl trifluoromethanesulfonate is added as the diluent to the electrolyte solution in Embodiments 1 to 9. Both the hydrogen-free polyhalogen substituted alkane compound and the phenyl trifluoromethanesulfonate have good compatibility with the organic solvent. A total salt concentration and a viscosity of the electrolyte solution can be reduced, and infiltration of electrode plates can be improved. In this way, polarization of the charge and discharge curves of the secondary cell can be reduced, thereby improving cycle performance of the secondary cell. In addition, the hydrogen-free polyhalogen substituted alkane compound may be decomposed on a surface of a metal lithium negative electrode to form a stable interphase film rich in a lithium fluoride compound, to reduce a side reaction between the electrolyte solution and the negative electrode and suppress growth of a lithium dendrite. In this way, safety, a coulombic efficiency, and cycle performance of the secondary cell can also be improved.

Although the diluent is also added to the electrolyte solution in Comparative Example 2, a molecular structure of the diluent 1,1,2,2-tetrafluoroethyl-2,2,3,3-tetrafluoropropylether in Comparative Example 2 includes a hydrogen element. At a high voltage, a hydrogen transfer reaction easily occurs on a surface of a positive electrode, resulting in irreversible oxidation and decomposition of the electrolyte solution. Consequently, the secondary cell has poor high-voltage cycle performance. However, a molecular structure of the hydrogen-free polyhalogen substituted alkane compound (for example, 1-chlorononafluorobutane, 1,1-dichlorotetrafluoroethane, or 1,1,1-trichlorotrifluoroethane) provided in this embodiment of this application does not include a hydrogen element. In this way, a hydrogen transfer reaction on a surface of a positive electrode can be effectively avoided, and oxidation and decomposition caused by contact between the electrolyte solution and the surface of the positive electrode at a high voltage can be suppressed, to improve a high-voltage resistance capability of the electrolyte solution, thereby further improving cycle performance of the secondary cell.

It can be learned from Table 1 and FIG. 7 that the decomposition potentials of the stainless steel/lithium batteries in Embodiment 10 and Embodiment 11 are both higher than the decomposition potential of the stainless steel/lithium

battery in Comparative Example 3; and capacity retention rates of lithium cobalt oxide/graphite secondary batteries in Embodiment 10 and Embodiment 11 after 100 cycles are both higher than a capacity retention rate of a lithium cobalt oxide/graphite secondary cell in Comparative Example 3 after 100 cycles.

This is mainly because a hydrogen-free polyhalogen substituted alkane compound (for example, 1-chlorononafluorobutane) and/or phenyl trifluoromethanesulfonate are/is added as a diluent in Embodiment 10 and Embodiment 11. A total salt concentration and a viscosity of the electrolyte solution can be reduced, and infiltration of the electrode plates can be improved, thereby improving cycle performance of the secondary cell. In addition, the hydrogen-free polyhalogen substituted alkane compound may be decomposed on a surface of a graphite negative electrode to form a stable interphase film rich in a lithium fluoride compound, to reduce a side reaction between the electrolyte solution and the negative electrode and suppress growth of a lithium dendrite. In this way, safety, a coulombic efficiency, and cycle performance of the secondary cell can also be improved.

In addition, a molecular structure of the hydrogen-free polyhalogen substituted alkane compound used in Embodiment 10 and Embodiment 11 does not include a hydrogen element. In this way, a hydrogen transfer reaction on a surface of a positive electrode can be effectively avoided, to help improve a high-voltage resistance capability of the electrolyte solution, thereby further improving cycle performance of the secondary cell.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A locally high-concentration electrolyte solution, comprising an electrolyte salt, an organic solvent, and a diluent, wherein the diluent comprises at least one of a hydrogen-free polyhalogen substituted alkane compound and phenyl trifluoromethanesulfonate; and
   a general formula of the hydrogen-free polyhalogen substituted alkane compound is $C_n(F_xCl_y)$, wherein n, x, and y are integers greater than or equal to 1, and n, x, and y satisfy: x+y=2n+2.

2. The locally high-concentration electrolyte solution according to claim 1, wherein a molecular polarity index **MPI** of the hydrogen-free polyhalogen substituted alkane compound satisfies the following formula:

$$MPI_1 = \frac{S_{polarity1}}{S_{total1}},$$

   wherein

   $MPI_1$ is the MPI of the hydrogen-free polyhalogen substituted alkane compound, $S_{polarity1}$ is a molecular polarity surface area of the hydrogen-free polyhalogen substituted alkane compound, and $S_{total1}$ is a total molecular surface area of the hydrogen-free polyhalogen substituted alkane compound;
   an MPI of the phenyl trifluoromethanesulfonate satisfies the following formula:

$$MPI_2 = \frac{S_{polarity2}}{S_{total2}},$$

   wherein
   $MPI_2$ is the MPI of the phenyl trifluoromethanesulfonate, $S_{polarity2}$ is a molecular polarity surface area of the phenyl trifluoromethanesulfonate, and $S_{total2}$ is a total molecular surface area of the phenyl trifluoromethanesulfonate; and
   a value of the MPI of the hydrogen-free polyhalogen substituted alkane compound and a value of the MPI of the phenyl trifluoromethanesulfonate satisfy a preset condition.

3. The locally high-concentration electrolyte solution according to claim 2, wherein the preset condition is that the value of the MPI of the hydrogen-free polyhalogen substituted alkane compound and the value of the MPI of the phenyl trifluoromethanesulfonate range from 5 to 10.

4. The locally high-concentration electrolyte solution according to any one of claims 1 to 3, wherein the hydrogen-free polyhalogen substituted alkane compound is of an asymmetric structure.

5. The locally high-concentration electrolyte solution according to any one of claims 1 to 4, wherein a solubility of the electrolyte salt in the hydrogen-free polyhalogen substituted alkane compound and a solubility of the electrolyte salt in the phenyl trifluoromethanesulfonate are less than or equal to 0.1 mol/L, and the hydrogen-free polyhalogen substituted alkane compound and the phenyl trifluoromethanesulfonate are soluble in the organic solvent.

6. The locally high-concentration electrolyte solution according to any one of claims 1 to 5, wherein a value of n ranges from 1 to 20.

7. The locally high-concentration electrolyte solution according to any one of claims 1 to 6, wherein a mass percentage of the diluent in the locally high-concentration electrolyte solution ranges from 10% to 90%.

8. The locally high-concentration electrolyte solution according to any one of claims 1 to 7, wherein a viscosity of the locally high-concentration electrolyte solution is less than or equal to 8 mPa·s, and a conductivity of the locally high-concentration electrolyte solution is greater than or equal to 2.5 mS/cm.

9. The locally high-concentration electrolyte solution according to any one of claims 1 to 8, wherein the electrolyte salt comprises at least one of a lithium salt, a sodium salt, a potassium salt, a magnesium salt, a zinc salt, and an aluminum salt.

10. The locally high-concentration electrolyte solution according to claim 9, wherein the electrolyte salt comprises at least one of $MClO_4$, $MBF_4$, $MPF_6$, $MAsF_6$, $MPF_2O_2$, $MCF_3SO_3$, MTDI, $MB(C_2O_4)_2$, $MBF_2C_2O_4$, $M[(CF_3SO_2)_2N]$, $M[(FSO_2)_2N]$, and $M[(C_mF_{2m+1}SO_2)(C_tF_{2t+1}SO_2)N]$, wherein
M is Li, Na, or K, and m and t are integers greater than or equal to 0.

11. The locally high-concentration electrolyte solution according to any one of claims 1 to 10, wherein a molar concentration of the electrolyte salt in the locally high-concentration electrolyte solution ranges from 1 mol/L to 8 mol/L.

12. The locally high-concentration electrolyte solution according to any one of claims 1 to 11, wherein the organic solvent comprises at least one of a carbonate solvent, a carboxylate solvent, and an ether solvent.

13. The locally high-concentration electrolyte solution according to any one of claims 1 to 12, wherein the locally high-concentration electrolyte solution further comprises an additive; and
the additive comprises at least one of vinylene carbonate, trifluoromethyl ethylene carbonate, vinyl ethylene carbonate, 1,3-propane sultone, 1,4-butane sultone, ethylene sulfate, ethylene sulfite, methylene methanedisulfonate, butanedinitrile, adiponitrile, 1,2-bis(2-cyanoethoxy)ethane, 1,3,6-hexanetricarbonitrile, biphenyl, and fluorobenzene.

14. A secondary cell, comprising a positive electrode, a negative electrode, a separator, and the locally high-concentration electrolyte solution according to any one of claims 1 to 13.

15. The secondary cell according to claim 14, wherein the secondary cell is a lithium secondary cell, a potassium secondary cell, a sodium secondary cell, a magnesium secondary cell, a zinc secondary cell, or an aluminum secondary cell.

16. An electronic device, comprising a housing, and a display, a circuit board assembly, and the secondary cell according to claim 14 or 15 that are accommodated in the housing, wherein the secondary cell supplies power to the circuit board assembly.

17. A mobile apparatus, wherein the mobile apparatus comprises the secondary cell according to claim 14 or 15.

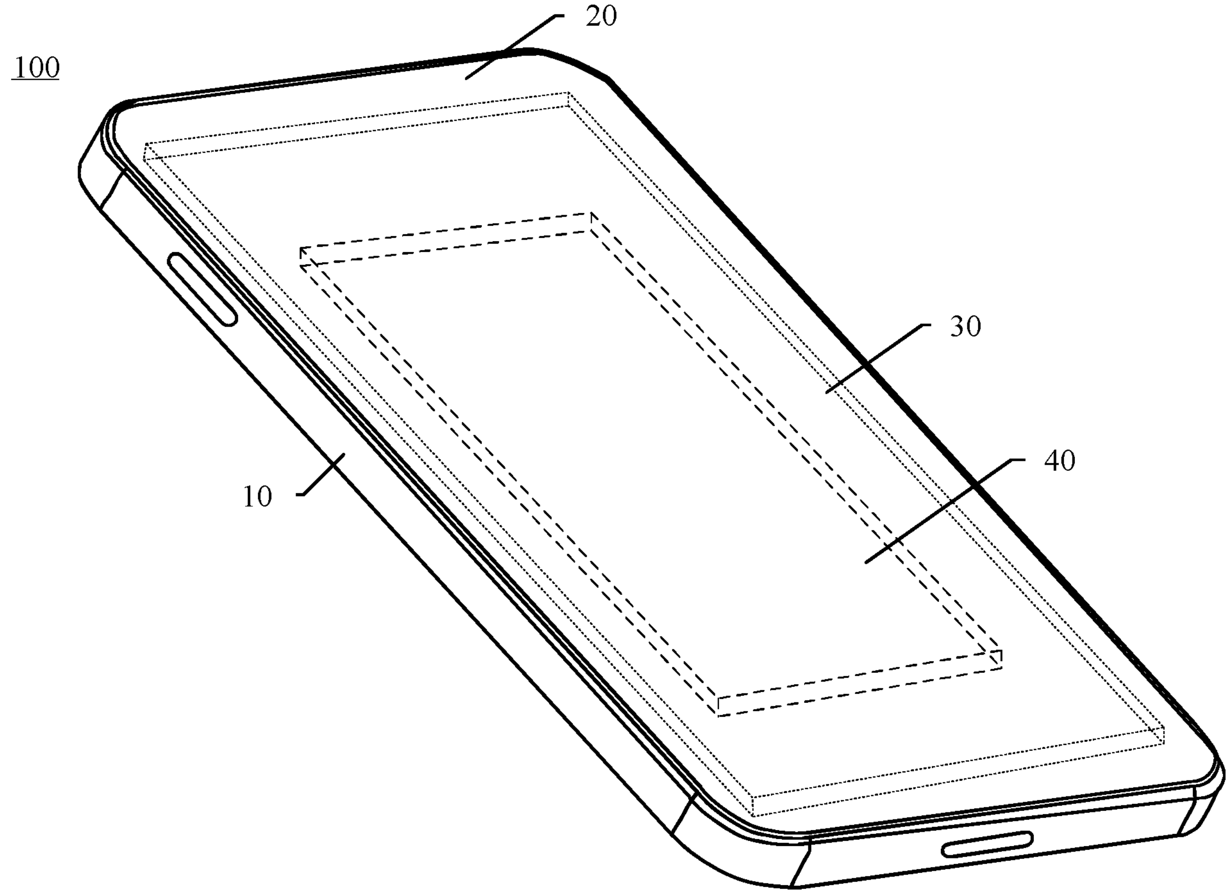


FIG. 1

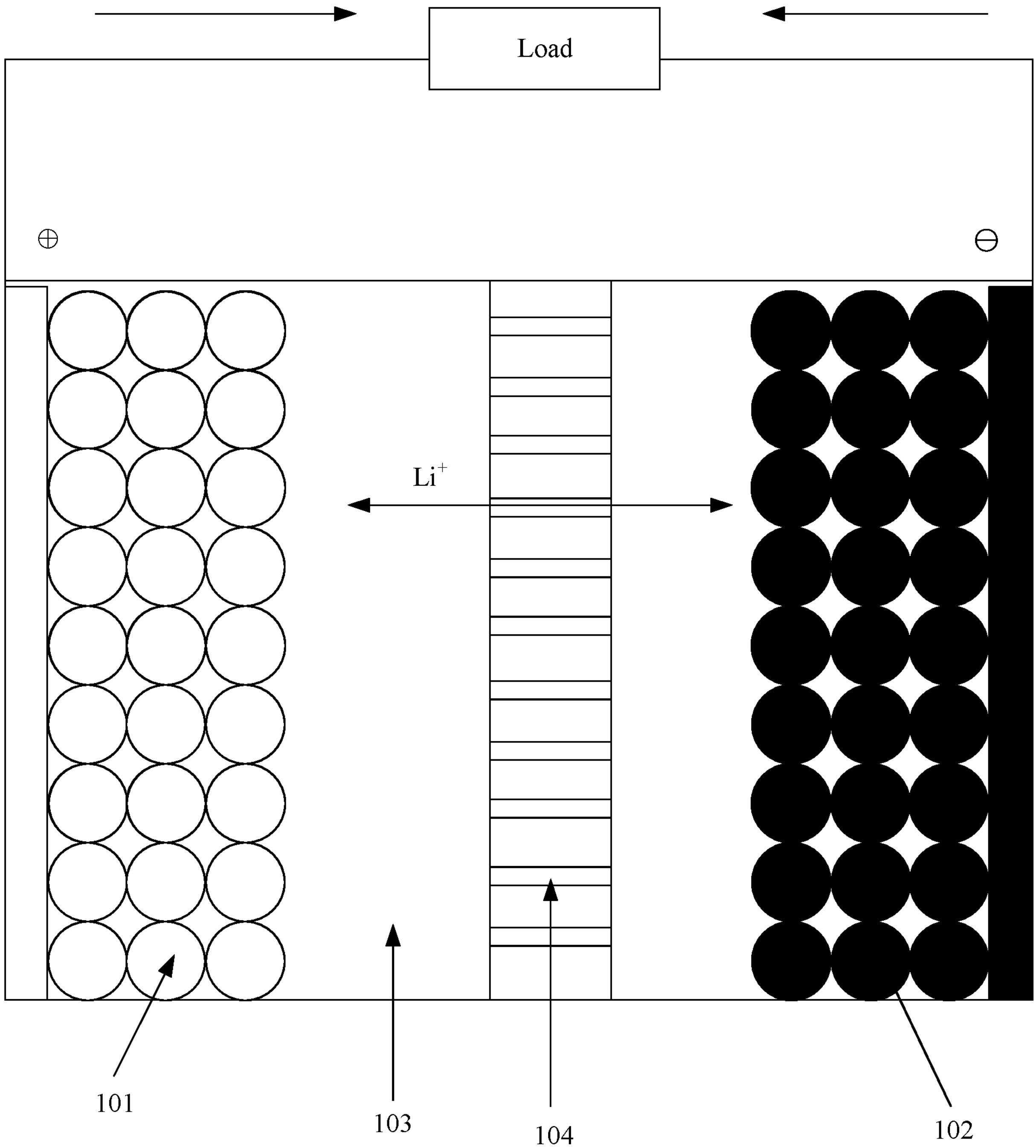


FIG. 2

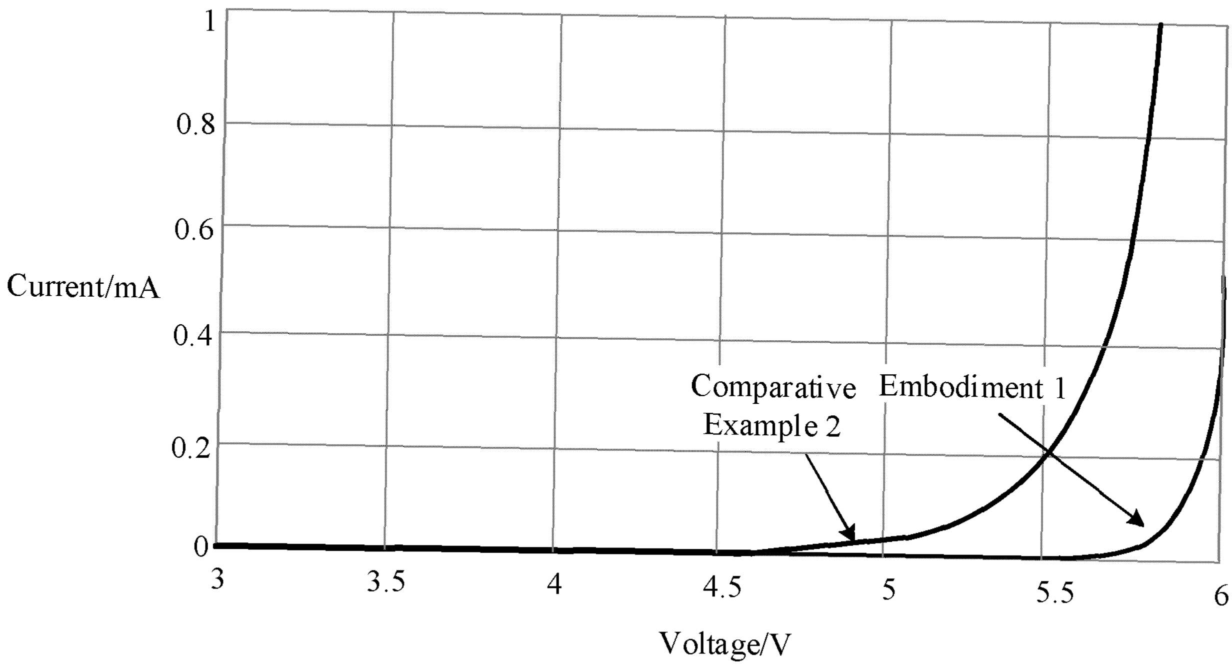
Current/mA
1
0.8
0.6
0.4
0.2
0
3
3.5
4
4.5
5
5.5
6
Voltage/V
Comparative Example 2
Embodiment 1

FIG. 3

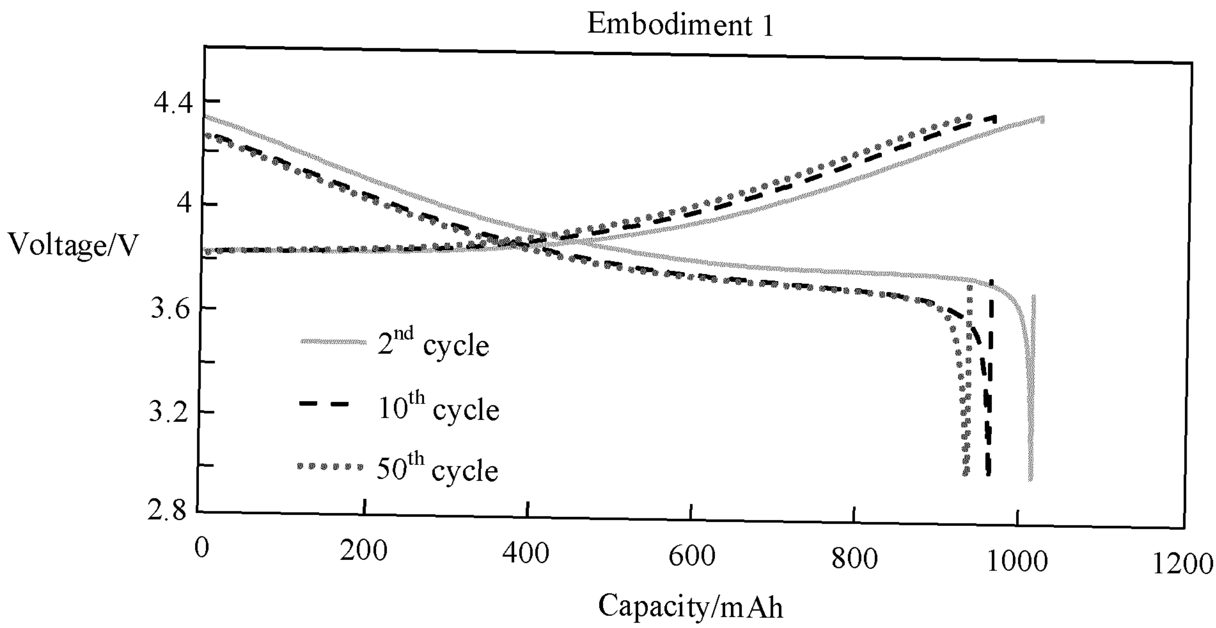
Embodiment 1
Voltage/V
4.4
4
3.6
3.2
2.8
0
200
400
600
800
1000
1200
Capacity/mAh
2nd cycle
10th cycle
50th cycle

FIG. 4

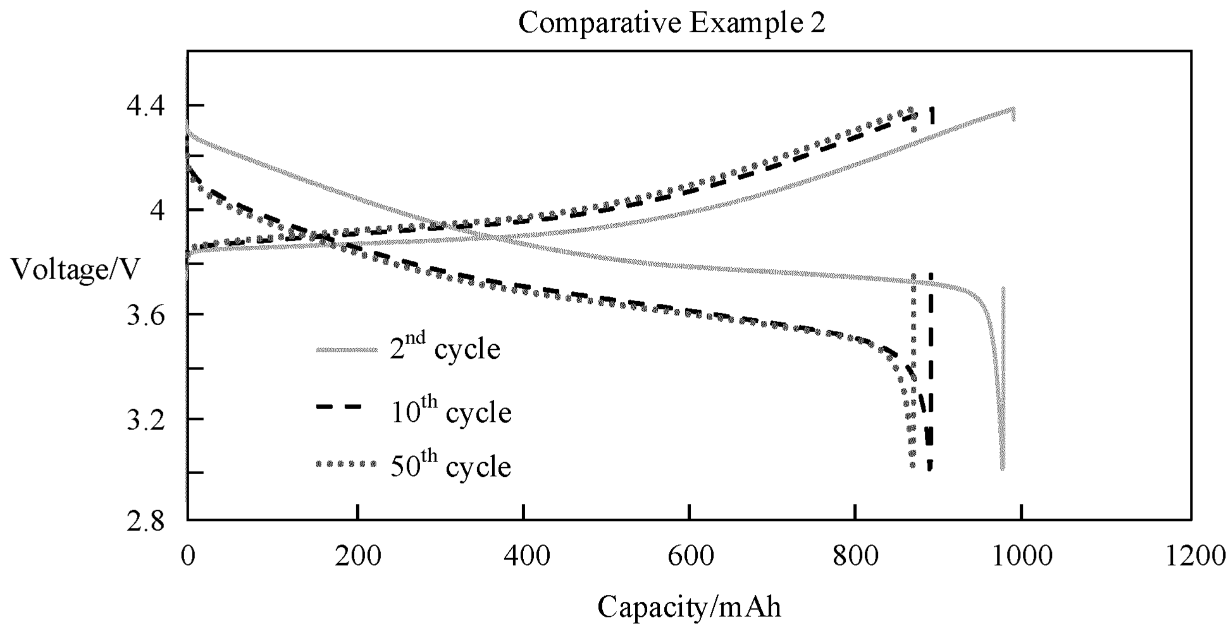
Comparative Example 2
Voltage/V
4.4
4
3.6
3.2
2.8
0
200
400
600
800
1000
1200
Capacity/mAh
2nd cycle
10th cycle
50th cycle

FIG. 5

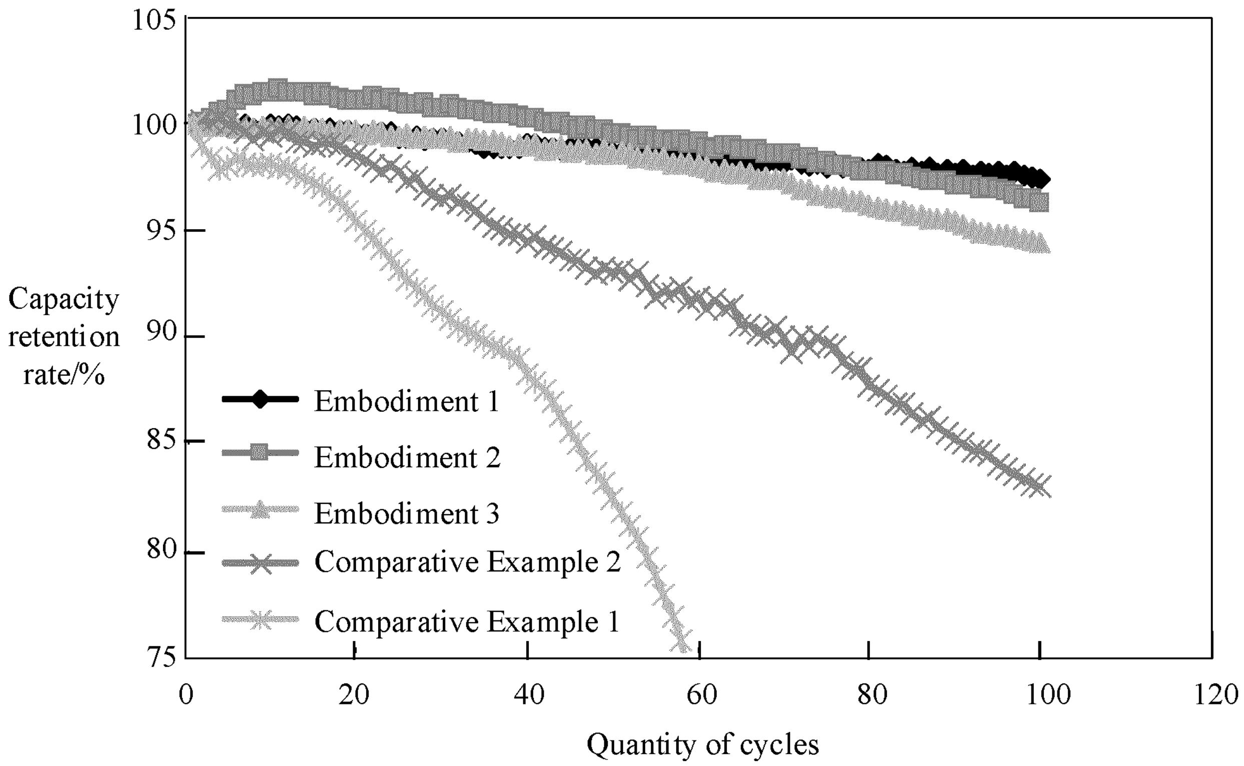
105
100
95
90
85
80
75
Capacity retention rate/%
0
20
40
60
80
100
120
Quantity of cycles
Embodiment 1
Embodiment 2
Embodiment 3
Comparative Example 2
Comparative Example 1

FIG. 6

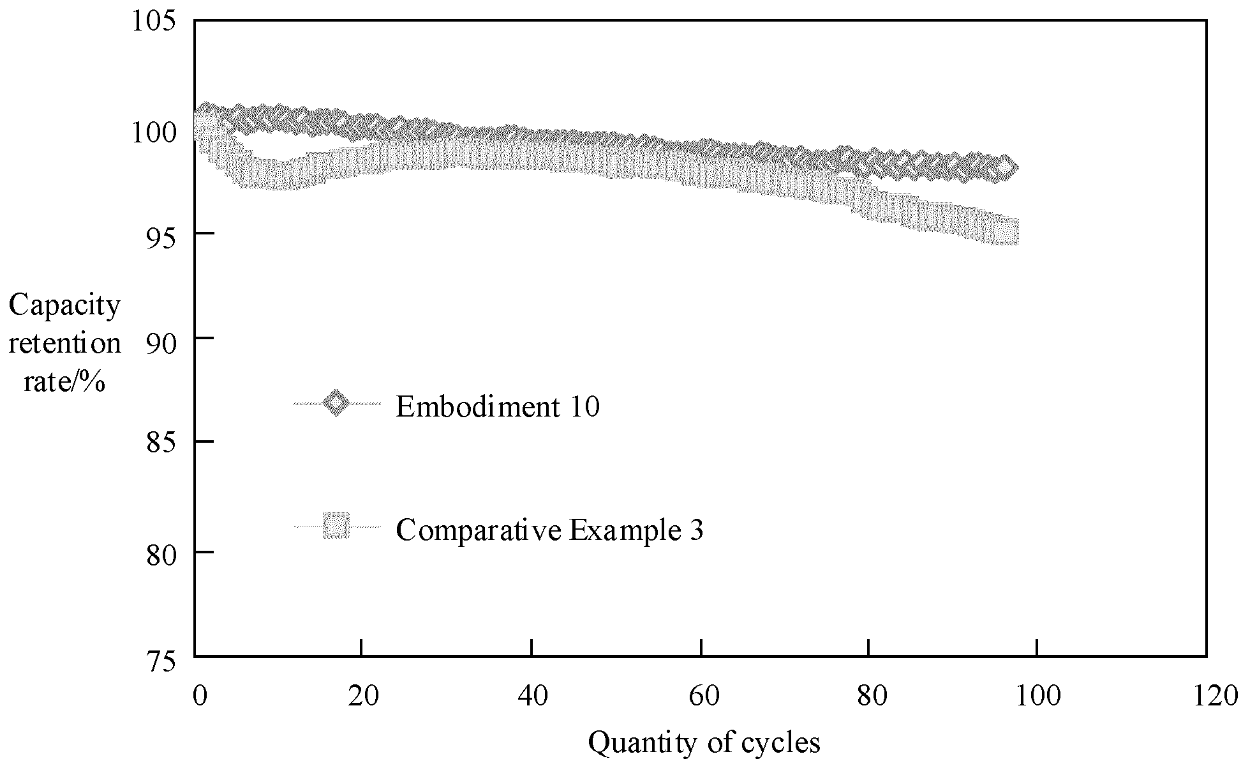
105
100
95
90
85
80
75
Capacity retention rate/%
Embodiment 10
Comparative Example 3
0
20
40
60
80
100
120
Quantity of cycles

FIG. 7

## INTERNATIONAL SEARCH REPORT

International application No. **PCT/CN2023/104406**

**A. CLASSIFICATION OF SUBJECT MATTER**

H01M10/0567(2010.01)i；C07C309/66(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 高, 浓度, 电解液, 电解质, 稀释剂, 添加剂, 取代烷, 烷取代, 卤素, 氟, 氯, 苯, 甲烷磺酸酯, 膜, 氢转移, 分解, 氟化物, high, concentration, electrolyte, diluent, additive, alkane, halogen, fluor+, chlor+, benzene, methane, sulfonate, hydrogen, transfer, decomposit+

**C. DOCUMENTS CONSIDERED TO BE RELEVANT**

| Category* | Citation of document, with indication, where appropriate, of the relevant passages | Relevant to claim No. |
|---|---|---|
| X | CN 101842349 A (UBE INDUSTRIES LIMITED) 22 September 2010 (2010-09-22)<br>description, paragraphs 2 and 12-136 | 1-17 |
| Y | CN 101842349 A (UBE INDUSTRIES LIMITED) 22 September 2010 (2010-09-22)<br>description, paragraphs 2 and 12-136 | 1-17 |
| X | CN 109755635 A (SHANSHAN ADVANCED MATERIALS (QUGZHOU) CO., LTD.) 14 May 2019 (2019-05-14)<br>description, paragraphs 5-36 | 1-17 |
| Y | CN 109755635 A (SHANSHAN ADVANCED MATERIALS (QUGZHOU) CO., LTD.) 14 May 2019 (2019-05-14)<br>description, paragraphs 5-36 | 1-17 |
| X | CN 103827416 A (BASF CORPORATION) 28 May 2014 (2014-05-28)<br>description, paragraphs 7-46 | 1-17 |
| Y | CN 103827416 A (BASF CORPORATION) 28 May 2014 (2014-05-28)<br>description, paragraphs 7-46 | 1-17 |

☑ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2023** | **12 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/104406**

**C. DOCUMENTS CONSIDERED TO BE RELEVANT**

| Category* | Citation of document, with indication, where appropriate, of the relevant passages | Relevant to claim No. |
|---|---|---|
| X | CN 112242562 A (DONGGUAN SHANSHAN BATTERY MATERIALS CO., LTD. et al.) 19 January 2021 (2021-01-19)<br>description, paragraphs 5-42 and 75-77 | 1-17 |
| Y | CN 112242562 A (DONGGUAN SHANSHAN BATTERY MATERIALS CO., LTD. et al.) 19 January 2021 (2021-01-19)<br>description, paragraphs 5-42 and 75-77 | 1-17 |
| A | JP 2017091806 A (ASAHI KASEI CORP.) 25 May 2017 (2017-05-25)<br>entire document | 1-17 |

Form PCT/ISA/210 (second sheet) (July 2022)

**INTERNATIONAL SEARCH REPORT**
**Information on patent family members**

International application No.
**PCT/CN2023/104406**

| Patent document cited in search report | | | Publication date (day/month/year) | Patent family member(s) | | | Publication date (day/month/year) |
|---|---|---|---|---|---|---|---|
| CN | 101842349 | A | 22 September 2010 | JPWO | 2009057515 | A1 | 10 March 2011 |
| | | | | JP | 5375616 | B2 | 25 December 2013 |
| | | | | WO | 2009057515 | A1 | 07 May 2009 |
| | | | | US | 2010291437 | A1 | 18 November 2010 |
| | | | | US | 8512897 | B2 | 20 August 2013 |
| | | | | KR | 20100098499 | A | 07 September 2010 |
| | | | | KR | 101486618 | B1 | 26 January 2015 |
| CN | 109755635 | A | 14 May 2019 | None | | | |
| CN | 103827416 | A | 28 May 2014 | KR | 20140034179 | A | 19 March 2014 |
| | | | | EP | 2697453 | A2 | 19 February 2014 |
| | | | | EP | 2697453 | A4 | 22 July 2015 |
| | | | | EP | 2697453 | B1 | 10 October 2018 |
| | | | | WO | 2012142060 | A2 | 18 October 2012 |
| | | | | WO | 2012142060 | A3 | 08 May 2014 |
| | | | | JP | 2014522077 | A | 28 August 2014 |
| | | | | JP | 6230989 | B2 | 15 November 2017 |
| | | | | US | 2014038059 | A1 | 06 February 2014 |
| | | | | US | 10056649 | B2 | 21 August 2018 |
| CN | 112242562 | A | 19 January 2021 | None | | | |
| JP | 2017091806 | A | 25 May 2017 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210832834